# EUROPÄISCHE PATENTSCHRIFT

(11) **EP 1 505 104 B1**
(45) Veröffentlichungstag und Bekanntmachung des Hinweises auf die Patenterteilung: **31.01.2007**
(21) Anmeldenummer: 04102620.4
(22) Anmeldetag: 09.06.2004
(51) Int. Cl.: C08J 9/00, C08K 5/00

(54) **Schäumbare Kompositionen, die Benzoesäureisononylester aufweisen**
Foamable compositions comprising benzoic acid isononyl esters
Compositions moussantes comprenant des esters isononyliques d'acide benzoique

(30) Priorität: 07.08.2003 DE 10336150
(43) Veröffentlichungstag der Anmeldung: 09.02.2005
(73) Patentinhaber: Oxeno Olefinchemie GmbH, 45772 Marl (DE)
(72) Erfinder: Grass , Michael, 45721, Haltern am See (DE); Koch, Jürgen, 45721, Haltern am See (DE)

(56) Entgegenhaltungen:
- EP-A- 1 354 867
- WO-A-97/39060
- DE-A- 1 962 500

## Beschreibung

Die Erfindung betrifft schäumbare Kompositionen, die Polyvinylchlorid und Benzoesäureisononylester (Isononylbenzoat, INB) aufweisen, sowie deren Verwendung.

Polyvinylchlorid (PVC) gehört zu den wirtschaftlich bedeutendsten Polymeren. Es findet sowohl als Hart-PVC als auch als Weich-PVC vielfältige Anwendungen.

Zur Erzeugung eines Weich-PVC werden dem PVC Weichmacher zugesetzt, wobei in der überwiegenden Anzahl der Fälle Phthalsäureester, insbesondere Di-2-ethylhexylphthalat (DEHP), Diisononylphthalat (DINP) und Diisodecylphthalat (DIDP) Verwendung fmden. Mit zunehmender Kettenlänge der Ester steigen die Löse- bzw. Geliertemperaturen und somit die Verarbeitungstemperaturen des Weich-PVC an. Die Verarbeitungstemperaturen können durch Zusatz von sogenannten Schnellgelierern wie beispielsweise die kurzkettigen Phthalate Di-n-butylphthalat (DBP), Diisobutylphthalat (DIBP), Benzylbutylphthalat (BBP) oder Diisoheptylphthalat (DIHP) wieder reduziert werden. Neben den kurzkettigen Phthalaten können auch Dibenzoesäureester wie Dipropylenglycoldibenzoat o.ä. zum gleichen Zwecke eingesetzt werden.

Diese Schnellgelierer zeigen oftmals die Eigenschaft, in PVC-Plastisolen auf Grund ihrer hohen Solvatationskraft mit der Zeit zu einem starken Viskositätsanstieg zu führen. Dies muss in vielen Fällen wieder durch Zugabe von (oft teuren) viskositätsreduzierenden Agenzien kompensiert werden.

Bei der Herstellung von PVC-Plastisolen ist in der Regel eine niedrige Viskosität und eine möglichst niedrige Geliertemperatur gefordert. Darüber hinaus wird eine hohe Lagerstabilität (geringer Viskositätsanstieg mit der Zeit) des Plastisols gewünscht.

Eine hohe Viskosität wäre bei der maschinellen Verarbeitung des Plastisols nachteilig; eine zu hohe Geliertemperatur würde zu Verfärbungen durch die thermische Belastung führen.

Weichmacher, die sowohl die Geliertemperatur in einer Formulierung signifikant absenken als auch die Viskosität des Plastisols auch nach mehrtägiger Lagerdauer auf einem niedrigen Niveau halten, sind bisher kaum bekannt. Kürzlich wurde 2-Ethylhexylbenzoat als ein Produkt, welches diese Anforderungen erfüllen könnte, vorgestellt [Bohnert, Stanhope, J. Vinyl Addit. Technol. (2000), 6(3), 146-149]. Diese Verbindung hat allerdings einen vergleichsweise hohen Dampfdruck, was oft zu nicht akzeptablen Verlusten während der Verarbeitung und zu vergleichsweise hohen Emissionen während des Gebrauchs führt.

In WO 01/29140 wird die Verwendung von Benzoesäureestern von C₈-Alkoholen in filmbildenden Kompositionen beschrieben.

In US 5,236,987 wird die Verwendung von Benzoaten aus C₈ bis C₁₂ Alkoholen in Plastisolen beschrieben. Ebenso wird die Verwendung dieser Verbindungen z.B. in Latex Formulierungen beschrieben.

In DE 19 62 500 werden Zusammensetzungen offenbart, die ein Vinylpolymerisat und einen oder mehrere Ester der Benzoesäure mit einem C₈- bis C₁₃-Alkohol sowie gegebenenfalls Bernsteinsäureester aufweisen. Diese Zusammensetzungen werden zur Herstellung von Polymerisatfilmen verwendet.

In WO 97/39060 werden Plastisole beschrieben, die als Weichmacher ein Benzoat eines C₁₁- bis C₁₄ Alkohols aufweisen. Diese Weichmacher werden unter anderem in Plastisolen zur Herstellung von Schäumen eingesetzt, wobei eine Verbesserung der Schaumstruktur im Vergleich zu herkömmlichen Plastisolen nicht festgestellt werden konnte. Eine signifikante Veränderung der Geliertemperatur in Abmischungen mit DINP konnte ebenfalls nicht festgestellt werden.

Aufgabe der vorliegenden Erfindung war die Bereitstellung von Zusammensetzungen zur Bildung von geschäumten Schichten, die Homo- oder Copolymere des Vinylchlorids und/oder des Polyvinylidendichlorid und/oder des chlorierten Polyethylens aufweisen, wobei der verwendete Benzoesäurealkylester sowohl die Viskosität der Zusammensetzung, in der Regel ein Plastisol, als auch dessen Geliertemperatur signifikant absenken und somit eine einfachere und schnellere Verarbeitung ermöglichen sollte. Zusätzlich sollte der Benzoesäurealkylester über eine möglichst preiswerte Rohstoffbasis verfügen.

Überraschenderweise wurde gefunden, dass schäumbare Kompositionen, die zumindest ein Polymer, ausgewählt aus Polyvinylchlorid, Polyvinylidenchlorid, chlorierten Polyolefinen und Copolymeren von Vinylchlorid mit Vinylidenchlorid, Vinylacetat, Vinylpropionat, Vinylbutyrat, Vinylbenzoat, Methylacrylat, Ethylacrylat, Butylacrylat, zumindest einen primären Weichmacher sowie einen Benzoesäureisononylester aufweisen, leicht und schnell zu verarbeiten sind.

Gegenstand der vorliegenden Erfindung sind deshalb schäumbare Kompositionen zur Herstellung von geschäumten Produkten, die zumindest ein Polymer, ausgewählt aus Polyvinylchlorid, Polyvinylidenchlorid, chlorierten Polyolefinen und Copolymeren von Vinylchlorid mit Vinylidenchlorid, Vinylacetat, Vinylpropionat, Vinylbutyrat, Vinylbenzoat, Methylacrylat, Ethylacrylat, Butylacrylat, zumindest einen primären Weichmacher, gegebenenfalls weitere Additive und einen Benzoesäurealkylester aufweisen, welche dadurch gekennzeichnet sind, dass als Benzoesäurealkylester Benzoesäureisononylester in der Komposition vorhanden ist und die Menge aller vorhandenen Weichmacher in der Komposition von 10 bis 400 Massenanteile bezogen auf 100 Massenanteile an Polymeren beträgt, wobei der Anteil des Benzoesäureisononylesters an der Masse der Weichmacher von 5 bis 95 Massen-% beträgt und dass die Komposition als Additiv einen Schaumstabilisator oder eine oder mehrere, Gasblasen entwickelnde Komponenten aufweist.

Ebenfalls Gegenstand der vorliegenden Erfindung ist die Verwendung von erfindungsgemäßen Kompositionen zur Herstellung von geschäumten Produkten, die zumindest ein Polymer, ausgewählt aus Polyvinylchlorid, Polyvinylidenchlorid, chlorierten Polyolefinen und Copolymeren von Vinylchlorid mit Vinylidenchlorid, Vinylacetat, Vinylpropionat, Vinylbutyrat, Vinylbenzoat, Methylacrylat, Ethylacrylat, Butylacrylat, zumindest einen primären Weichmacher, Benzoesäureisononylester und gegebenenfalls weitere Additive aufweisen.

Außerdem ist Gegenstand der vorliegenden Erfindung ein Verfahren zur Herstellung von Produkten die zumindest eine geschäumte Polymerschicht, ausgewählt aus den Polymeren Polyvinylchlorid, Polyvinylidenchlorid, chlorierten Polyolefinen und Copolymeren von Vinylchlorid mit Vinylidenchlorid, Vinylacetat, Vinylpropionat, Vinylbutyrat, Vinylbenzoat, Methylacrylat, Ethylacrylat, Butylacrylat, aufweisen, welches dadurch gekennzeichnet ist, dass eine erfindungsgemäße Komposition auf einen Träger oder eine weitere Polymerschicht aufgebracht wird, und die Komposition vor oder nach dem Aufbringen geschäumt wird und die aufgebrachte und geschäumte Komposition abschließend thermisch verarbeitet wird.

Zudem sind Gegenstand der vorliegenden Erfindung Produkte, die zumindest ein Polymer, ausgewählt aus Polyvinylchlorid, Polyvinylidenchlorid, chlorierten Polyolefinen und Copolymeren von Vinylchlorid mit Vinylidenchlorid, Vinylacetat, Vinylpropionat, Vinylbutyrat, Vinylbenzoat, Methylacrylat, Ethylacrylat, Butylacrylat, aufweisen, und welche dadurch gekennzeichnet sind, dass sie geschäumte Schichten der erfindungsgemäßen Kompositionen aufweisen.

Die erfindungsgemäße Komposition hat den Vorteil, dass starke Anstiege der Viskosität bei höheren Schergeschwindigkeiten (sog. Dilatanz), wie sie bei der Verarbeitung von Kompositionen gemäß dem Stand der Technik (z.B. Blends von Glycol-di-benzoaten) zu beobachten sind, bei der Verarbeitung von erfindungsgemäßen Kompositionen, sowohl bei der Herstellung von chemischen als auch mechanischen Schäumen nicht oder nur in deutlich geringerem Maße beobachtet werden.

Die erfindungsgemäßen Kompositionen weisen neben einer geringen Viskosität, auch nach längerer Lagerzeit, eine beschleunigte Gelierung sowie eine gute Kälteflexibilität auf. Im Vergleich mit herkömmlichen schäumbaren Kompositionen, die z.B. Benzylbutylphthalat, Diisobutylphthalat oder Glycoldibenzoate als Weichmacher aufweisen, lässt sich außerdem eine bessere Verschäumbarkeit (geringere Schaumdichten) feststellen.

Die erfindungsgemäßen Kompositionen und das erfindungsgemäße Verfahren wird nachfolgend beispielhaft beschrieben, ohne dass die Erfindung auf diese Ausführungsformen beschränkt sein soll.

Die erfindungsgemäßen schäumbaren Kompositionen zur Herstellung von geschäumten Produkten, die zumindest ein Polymer, ausgewählt aus Polyvinylchlorid, Polyvinylidenchlorid, chlorierten Polyolefinen und Copolymeren von Vinylchlorid mit Vinylidenchlorid, Vinylacetat, Vinylpropionat, Vinylbutyrat, Vinylbenzoat, Methylacrylat, Ethylacrylat, Butylacrylat, zumindest einen primären Weichmacher, gegebenenfalls weitere Additive und einen Benzoesäurealkylester aufweisen, zeichnen sich dadurch aus, dass als Benzoesäurealkylester in diesen Kompositionen Benzoesäureisononylester vorhanden ist und die Menge aller vorhandenen Weichmacher von 10 bis 400 Massenanteile bezogen auf 100 Massenanteile an Polymeren beträgt, wobei der Anteil des Benzoesäureisononylesters an der Menge der Weichmacher von 5 bis 95 Massen-% beträgt. Es kann vorteilhaft sein, wenn der Anteil des Gemisches aus einem oder mehreren primären Weichmachern und Benzoesäureisononylester an der Komposition von 15 bis 200 und bevorzugt von 20 bis 100 Massenanteile bezogen auf 100 Massenanteile an Polymeren beträgt. Ebenso kann es vorteilhaft sein, wenn das Weichmachergemisch selbst einen Anteil an Benzoesäureisononylester von 10 bis 70 Massen-% und bevorzugt von 10 bis 50 Massen-% aufweist.

Vorzugsweise weist die erfindungsgemäße Komposition ein isomeres Gemisch von Benzoesäureisononylester auf, wobei die durch Verseifung der isomeren Benzoesäureisononylester erhaltenen Nonylalkohole weniger als 10 Mol % 3,5,5-Trimethylhexanol enthalten. Die Verseifung der Benzoesäureester bzw. der weiteren, im folgenden noch genannten Ester kann nach üblichen Methoden durch Umsetzung mit alkalischen Medien erfolgen (siehe z. B. Ullmann's Enzyklopädie der Technischen Chemie, 5 Ed. A 10, S. 254-260).

Bei den erfindungsgemäßen verschäumbaren Kompositionen kann es sich z.B. um Plastisole handeln. Unter den oben genannten Polymeren sind die bevorzugt, die die Herstellung von Plastisolen ermöglichen. Besonders bevorzugt weist eine erfindungsgemäße Komposition einen oder mehrere PVC-Typen auf, die über das Emulsions-Polymerisationsverfahren hergestellt worden sind, sog. Emulsions-PVC oder E-PVC. Ganz besonders bevorzugt weist eine erfindungsgemäße Komposition E-PVC auf, das ein Molekulargewicht, angegeben als K-Wert (Fikentscher-Konstante), von 60 bis 90 und besonders bevorzugt von 65 bis 85 aufweist.

Als primäre Weichmacher können die erfindungsgemäßen Kompositionen eine oder mehrere der nachfolgend aufgeführten Verbindungen, wie z. B. Phthalsäuredialkylester, wobei deren Alkylreste 4 bis 13 Kohlenstoffatome enthalten, Adipinsäurealkylester, wobei deren Alkylreste 4 bis 13 Kohlenstoffatome enthalten, und/oder Cyclohexandicarbonsäurealkylester, wobei deren Alkylreste 4 bis 13 Kohlenstoffatome, Trimellitsäureester, mit 7 bis 10 Kohlenstoffatome in der Alkoholkette, Alkylsulfonsäureester des Phenols, Polymerweichmacher, Alkyl-Benzylphthalate, wie z.B. Butyl-Benzylphthalate oder Octylbenzylphthalate, Dibenzoesäurester, insbesondere von Diethylenglycol, Dipropylenglycol oder Triethylenglycol und/oder Citronensäureester aufweisen.

Aus dieser Aufzählung der vorzugsweise eingesetzten primären Weichmacher sind die nachfolgend aufgeführten besonders bevorzugt.

So sind von den Phthalsäuredialkylestem solche mit 4 bis 11 C-Atomen aufweisenden Alkylresten besonders bevorzugt. Hierbei ist es unerheblich, ob die Alkylreste gleich oder verschieden und/oder linear oder verzweigt sind. Besonders bevorzugte Phthalsäuredialkylester sind hierbei Phthalsäurediisobutylester (DIBP), Phthalsäuredi-n-butylester (DBP), Phthalsäurebenzyl-n-butylester (BBP), Phthalsäurediisopentylester (DIPP), Phthalsäurediisoheptylester (DIHP), Phthalsäuredi-2-ethylhexylester (DEHP), Phthalsäurediisooctylester (DIOP), Phthalsäurediisononylester (DINP), Phthalsäurediisodecylester (DIDP), Phthalsäuredi-2-propylheptylester (DPHP), Phthalsäurediisoundecylester (DIUP), Phthalsäuredi-C₈-C₁₀-alkylester, Phthalsäuredi-C₇-C₉-alkylester, Phthalsäuredi-C₇-C₁₁-alkylester, Phthalsäuredi-C₉-C₁₁-alkylester, Phthalsäuredi-C₆-C₁₀-alkylester.

Bei den Cyclohexansäuredicarbonsäureestern sind solche mit 7 bis 11 C-Atomen aufweisenden Alkylresten bevorzugt. Hierbei ist es ebenfalls unerheblich, ob die Alkylreste gleich oder verschieden und/oder linear oder verzweigt sind, oder in welchem cis-trans-Verhältnis die Estergruppen zueinander stehen. Besonders bevorzugte Cyclohexansäuredicarbonsäureester sind insbesondere 1,2-Cyclohexandicarbonsäure-diisoheptylester, 1,2-Cyclohexandicarbonsäuredi-2-ethylhexylester, 1,2-Cyclohexandicarbonsäure-diisononylester, 1,2-Cyclohexandicarbonsäure-diisodecylester, 1,2-Cyclohexandicarbonsäure-di-2-propylheptylester; 1,4-Cyclohexandicarbonsäure-diisoheptylester, 1,4-Cyclohexandicarbonsäure-di-2-ethylhexylester, 1,4-Cyclohexandicarbonsäure-diisononylester, 1,4-Cyclohexandicarbonsäurediisodecylester, 1,4-Cyclohexandicarbonsäure-di-2-propylheptylester.

Auch bei den Trimellitsäureestern (1,2,4-Benzoltricarbonsäureester) mit 7 bis 10 C-Atomen in der Alkoholkette ist es unerheblich, ob die Alkylreste gleich oder verschieden und/oder linear oder verzweigt sind. Besonders bevorzugte Trimellitsäureester sind Tri-2-ethylhexyltrimellitat, Tri-isononyltrimellitat, Triisodecyltrimellitat, Tri-2-propylheptyltrimellitat, Tri-C₇-C₉-alkylester, Tri-C₈-C₁₀-alkylester.

Als Citronensäureester weisen erfindungsgemäße Kompositionen vorzugsweise solche mit 2 bis 10 C-Atomen in den Alkoholketten, jeweils mit oder ohne carboxylierter OH-Gruppe, auf. Hierbei ist es unerheblich, ob die Alkylreste gleich oder verschieden, linear oder verzweigt sind. Besonders bevorzugt sind Acetyltributylcitrat, Tri-2-ethylhexylcitrat, Acetyltri-2-ethylhexylcitrat, Acetyltriisononylcitrat, Triisononylcitrat, Tri-n-butylcitrat, Tri-C₆-C₁₀-alkylcitrat, Butyryltri-n-hexylcitrat als Citronensäureester in der erfindungsgemäßen Komposition vorhanden.

Auch bei den Adipinsäureestern mit 4 bis 13 C-Atomen in der Alkoholkette ist es unerheblich, ob die Alkylreste gleich oder verschieden und/oder linear oder verzweigt sind. Besonders bevorzugt sind in der erfindungsgemäßen Komposition Dibutyladipat, Di-2-ethylhexyladipat, Diisononyladipat, Diisodecyladipat, Di-2-propylheptyladipat, Diisotridecyladipat als Adipinsäureester vorhanden.

Die erfindungsgemäße Komposition weist als Dibenzoesäureester bevorzugt Alkylendioldibenzoate und hierbei insbesondere Glycoldibenzoate wie Diethylenglycoldibenzoat, Dipropylenglycoldibenzoat, Diisopropylenglycoldibenzoat, Dibutylenglycoldibenzoat, Tripropylenglycoldibenzoat, Triethylenglycoldibenzoat oder Mischungen aus zwei oder mehreren dieser Verbindungen auf.

Ganz besonders bevorzugt weist eine erfindungsgemäße Komposition als primären Weichmacher einen Phthalsäurealkylester, vorzugsweise Phthalsäurediisononylester (DINP), Phthalsäurediisoheptylester (DIHP), Phthalsäurediisodecylester (DIDP), Phthalsäuredi-2-propylheptylester (DPHP) und/oder Phthalsäuredi-2-ethylhexylester (DEHP), einen Cyclohexandicarbonsäurealkylester, vorzugsweise Cyclohexandicarbonsäurediisononylester (DINCH) und/oder einen Adipinsäurealkylester, vorzugsweise Adipinsäurediisononylester (DINA) und/oder Adipinsäuredi-2-ethylhexylester (DEHA) auf.

Es versteht sich von selbst, dass die genannten, als primäre Weichmacher in der Komposition vorhandenen Verbindungen auf handelsübliche Produkte zurückgehen können. So können die erfindungsgemäßen Kompositionen als Benzoate zum Beispiel die Handelsprodukte K-flex (Kalama Chem; beispielsweise die Produkttypen DP, DE und 500) oder Benzoflex (Velsicol; beispielsweise die Produkttypen 9-88, 2-45, 50, 2088) aufweisen, welche auf der Basis der Rohstoffe Benzoesäure, Diethylenglycol, Dipropylenglycol und Triethylenglycol hergestellt werden. Als Phthalate können die erfindungsgemäßen Kompositionen die technischen Phthalate, wie sie z.B. unter den Handelsnamen Vestinol C (Di-n-butylphthalat) (CAS Nr.84-74-2), Vestinol IB (Di-i-butylphthalat) (CAS Nr. 84-69-5), Jayflex DINP (CAS Nr.68515-48-0 ), Jayflex DIDP (CAS Nr.68515-49-1), Palatinol 9P (68515-45-7), Vestinol 9 (CAS Nr. 28553-12-0), TOTM (CAS Nr. 3319-31-1), Linplast 68-TM , Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr.68515-47-9), Jayflex L9P (CAS Nr. 68515-45-7), Jayflex L911P (CAS Nr. 68515-43-5), Jayflex L11P (CAS Nr. 3648-20-2), Witamol 110 (CAS Nr. 68515-51-5), Witamol 118 ( Di-n-C8-C10-alkylphthalat) (CAS Nr.71662-46-9), Unimoll BB (CAS Nr. 85-68-7), Linplast 1012 BP (CAS Nr. 90193-92-3), Linplast 13XP (CAS Nr.27253-26-5), Linplast 610P (CAS Nr. 68515-51-5), Linplast 68 FP (CAS Nr. 68648-93-1), Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr.26761-40-0), Palatinol DIPP (CAS Nr. 84777-06-0), Jayflex 77 ( CAS Nr. 71888-89-6), Palatinol 10 P (CAS Nr. 53306-54-0) oder Vestinol AH (CAS Nr. 117-81-7) angeboten werden, eingesetzt werden. "CAS Nr." bedeutet Chemical Abstracts' Registry Number. Selbstverständlich können auch Gemische aus zwei oder mehr dieser handelsüblichen Produkte als primäre Weichmacher in der erfindungsgemäßen Komposition vorhanden sein.

Neben den gerade genannten Verbindungen, die als primäre Weichmacher in der erfindungsgemäßen Komposition vorhanden sein können, können als primäre Weichmacher in der erfindungsgemäßen Komposition aber auch polymere Weichmacher auf Basis von Dicarbonsäuren wie Adipin- oder Phthalsäure sowie mehrwertigen Alkoholen vorhanden sein.

Als Additive kann die erfindungsgemäße schäumbare Komposition zumindest ein Additiv, ausgewählt aus der Gruppe der Füllstoffe, Pigmente, Thermostabilisatoren, Antioxidantien, Viskositätsregulierer, Schaumstabilisatoren und Gleitmittel aufweisen.

Die Thermostabilisatoren neutralisieren u.a. während und/oder nach der Verarbeitung des PVCs abgespaltene Salzsäure und verhindern einen thermischen Abbau des Polymeren. Als Thermostabilisatoren kommen alle üblichen PVC-Stabilisatoren in fester und flüssiger Form in Betracht, beispielsweise auf Basis von Ca/Zn, Ba/Zn, Pb, Sn oder organischer Verbindungen (OBS), sowie auch säurebindende Schichtsilikate wie Hydrotalcit. Die erfindungsgemäßen Gemische können einen Gehalt von 0,5 bis 10 , bevorzugt 1 bis 5, besonders bevorzugt von 1,5 bis 4 Massenteilen pro 100 Massenteilen Polymer an Thermostabilisator aufweisen.

Als Pigmente können im Rahmen der vorliegenden Erfindung sowohl anorganische als auch organische Pigmente eingesetzt werden. Der Gehalt an Pigmenten liegt zwischen 0,01 bis 10%, bevorzugt 0,05 bis 5, besonders bevorzugt 0,1 bis 3 Massen-%. Beispiele für anorganische Pigmente sind CdS, CoO/Al₂O₃, Cr₂O₃. Bekannte organische Pigmente sind beispielsweise Azofarbstoffe, Phthalocyaninpigmente, Dioxazinpigmente sowie Anilinpigmente.

Als viskositätssenkende Reagenzien können aliphatische oder aromatische Kohlenwasserstoffe aber auch Carbonsäurederivate wie beispielsweise das als TXIB (Fa. Eastman) bekannte 2,2,4-Trimethyl-1,3-pentandiol-diisobutyrat eingesetzt werden. Letzteres lässt sich auch auf Grund ähnlicher Eigenviskosität sehr leicht durch Benzoesäureisononylester substituieren. Viskositätssenkende Reagenzien werden in Anteilen von 0,5 bis 50, bevorzugt 1 bis 30, besonders bevorzugt 2 bis 10 Massenteilen pro 100 Massenteilen Polymer zugegeben.

Als Schaumstabilisatoren können handelsübliche Schaumstabilisatoren in der erfindungsgemäßen Zusammensetzung vorhanden sein. Solche Schaumstabilisatoren können z.B. auf Silikon oder Seife basieren und werden z.B. unter den Markennamen BYK (Byk-Chemie) und SYNTHAMID (Th. Boehme GmbH) angeboten. Diese werden in Mengen von 1 bis 10, bevorzugt 1 bis 8, besonders bevorzugt 2 bis 4 Massenteilen pro 100 Massenteilen Polymer eingesetzt.

Je nach dem ob die schäumbare Komposition chemisch oder mechanisch geschäumt werden soll, kann die Komposition eine oder mehrere Gasblasen entwickelnde Komponenten und optional einen Kicker aufweisen. Als schäumbare Komponente ist vorzugsweise eine Verbindung vorhanden, die unter Wärmeeinfluss in überwiegend gasförmige Bestandteile zerfällt, die ein Aufblähen der Komposition bewirken. Ein typischer Vertreter solcher Verbindungen ist beispielsweise das Azodicarbonamid. Die Zerfallstemperatur des Treibmittels kann durch das Vorhandensein von Katalysatoren in der erfindungsgemäßen Zusammensetzung deutlich verringert werden. Diese Katalysatoren sind dem Fachmann als "Kicker" geläufig und können entweder separat oder bevorzugt als ein System mit dem Stabilisator zugegeben werden.

Die Herstellung des in der erfindungsgemäßen Komposition vorhandenen Benzoesäureisononylesters wird im Folgenden beschrieben. Einsatzprodukt für die Herstellung des Benzoesäureisononylesters ist ein Gemisch isomerer Nonylalkohole sowie Benzoesäure. Das zur Herstellung des Benzoesäureisononylesters eingesetzte Gemisch von isomeren Nonylalkoholen wird häufig als Isononanol bezeichnet. Die bevorzugt eingesetzten Gemische (Isononanole) weisen eine hohe Linearität auf, die durch einen Anteil von weniger als 10 Mol % (0-10), bevorzugt weniger als 5 (0-5) Mol %, besonders bevorzugt weniger als 2 (0-2) Mol % an 3,5,5-Trimethylhexanol gekennzeichnet ist. Die Isomerenverteilung von Nonylalkohol-Gemischen wird durch die Art der Herstellung des Nonylalkohols (Isononanol) bestimmt. Die Isomerenverteilungen der Nonylreste können mit den üblichen, dem Fachmann geläufigen Meßmethoden wie NMR-Spektroskopie, GC- oder GC/MS-Spektroskopie ermittelt werden. Die gemachten Angaben beziehen sich auf alle im folgenden genannten Nonylalokohol-Gemische. Solche Nonylalkohole (Nonylalkohol-Gemische) sind kommerziell unter den CAS-Nummern 27458-94-2, 68515-81-1, 68527-05-9 oder 68526-84-1 erhältlich.

Isononanol wird durch Hydroformylierung von Octenen, die wiederum auf unterschiedliche Art erzeugt werden, hergestellt. Als Rohstoff hierzu dienen im allgemeinen technische C₄-Ströme, die zunächst alle isomeren C₄-Olefine neben den gesättigten Butanen und ggf. Verunreinigungen wie C₃- und C₅-Olefinen und acetylenischen Verbindungen enthalten. Durch Oligomerisierung dieses Olefmgemisches erhält man vorwiegend isomere Octengemische neben höheren Oligomeren wie C₁₂- und C₁₆-Olefingemischen. Diese Octengemische werden zu den entsprechenden Aldehyden hydroformyliert und anschließend zum Alkohol hydriert.

Die Zusammensetzung, d. h. die Isomerenverteilung der technischen Nonanolgemische ist abhängig vom Ausgangsmaterial und von den Oligomerisierungs- und Hydroformylierungsverfahren. Zur Herstellung der erfindungsgemäßen Ester können alle diese Gemische eingesetzt werden. Bevorzugte Nonanolgemische sind diejenigen, die durch Hydroformylierung von C₈-Olefingemischen, erhalten durch Oligomerisierung von im Wesentlichem linearen Butenen an Nickelträgerkatalysatoren (z. B. OCTOL-Prozeß, OXENO Olefmchemie GmbH), in Gegenwart bekannter Katalysatoren, z.B. Co- oder Rh-Verbindungen und anschließender Hydrierung des entkatalysierten Hydroformylierungsgemisches gewonnen wurden. Dabei beträgt der Anteil von Isobuten im Ausgangsstoff, bezogen auf den Gesamtbutengehalt, weniger als 5 Gew-%, vorzugsweise weniger als 3 Gew-%, besonders bevorzugt weniger als 1 Gew-%. Hierdurch wird erreicht, dass der Anteil stärker verzweigter Nonanol-Isomerer, u.a. auch der des 3,5,5-Trimethylhexanols, welches sich als wenig vorteilhaft gezeigt hat, deutlich zurück gedrängt wird und im Rahmen der bevorzugten Bereiche liegt.

Die erfindungsgemäße Komposition kann aber auch Benzoesäureisononylester aufweisen, die durch Veresterung von Benzoesäure mit einer kommerziell erhältlichen Alkoholmischung, die z.B. die CAS-Nummern 68551-09-7, 91994-92-2, 68526-83-0, 66455-17-2, 68551-08-6, 85631-14-7 oder 97552-90-4 aufweisen können, erhalten werden. Es handelt sich hier um Alkoholmischungen, die neben den genannten Isononylalkoholen auch Alkohole mit 7 bis 15 Kohlenstoffatome (gemäß CAS-Defmition) enthalten. Es werden also Benzoesäurealkylestergemische erhalten, die neben Benzoesäureisononylester weitere Alkylester der Benzoesäure aufweisen.

Die Herstellung von Benzoesäureisononylester, also die Veresterung der Benzoesäure mit einem isomerenreinen Nonanol oder einem Isononanolgemisch zu den entsprechenden Estern kann autokatalytisch oder katalytisch, beispielsweise mit Brönstedt- oder Lewissäuren durchgeführt werden. Ganz gleich welche Art der Katalyse gewählt wird, entsteht immer ein temperaturabhängiges Gleichgewicht zwischen den Einsatzstoffen (Säure und Alkohol) und den Produkten (Ester und Wasser). Um das Gleichgewicht zu Gunsten des Esters zu verschieben, kann ein Schleppmittel eingesetzt werden, mit dessen Hilfe das Reaktionswasser aus dem Ansatz entfernt wird. Da die zur Veresterung eingesetzten Alkoholgemische niedriger als die Benzoesäure und deren Ester sieden und mit Wasser eine Mischungslücke aufweisen, werden sie häufig als Schleppmittel eingesetzt, das nach Wasserabtrennung wieder in den Prozess zurückgeführt werden kann.

Der zur Bildung des Esters eingesetzte Alkohol bzw. das isomere Alkoholgemisch, das gleichzeitig als Schleppmittel dient, wird deshalb im Überschuss, bevorzugt mit einem Überschuss von 5 bis 50 %, insbesondere 10 bis 30 % der zur Bildung des Esters notwendigen Menge eingesetzt.

Als Veresterungskatalysatoren können Säuren, wie beispielsweise Schwefelsäure, Methansulfonsäure oder p-Toluolsulfonsäure, oder Metalle oder deren Verbindungen eingesetzt werden. Geeignet sind z. B. Zinn, Titan, Zirconium, die als feinverteilte Metalle oder zweckmäßig in Form ihrer Salze, Oxide oder löslichen organischen Verbindungen verwendet werden. Die Metallkatalysatoren sind im Gegensatz zu Protonensäuren Hochtemperaturkatalysatoren, die ihre volle Aktivität oft erst bei Temperaturen oberhalb 180 °C erreichen. Sie werden jedoch bevorzugt eingesetzt, weil sie im Vergleich zur Protonenkatalyse weniger Nebenprodukte, wie beispielsweise Olefine aus dem eingesetzten Alkohol, bilden. Beispielhafte Vertreter für Metallkatalysatoren sind Zinnpulver, Zinn(II)oxid, Zinn(II)oxalat, Titansäureester wie Tetraisopropylorthotitanat oder Tetrabutylorthotitanat sowie Zirconiumester wie Tetrabutylzirconat.

Die Katalysatorkonzentration hängt von der Art des Katalysators ab. Bei den bevorzugt eingesetzten Titanverbindungen beträgt diese 0,005 bis 1,0 Massen-% bezogen auf das Reaktionsgemisch, insbesondere 0,01 bis 0,5 Massen-%, ganz besonders 0,01 bis 0,1 Massen-%.

Die Reaktionstemperaturen der Veresterung betragen bei Verwendung von Titankatalysatoren vorzugsweise von 160 °C bis 270 °C, vorzugsweise von 180 bis 250 °C. Die optimalen Temperaturen hängen von den Einsatzstoffen, vom Reaktionsfortschritt und der Katalysatorkonzentration ab. Sie können für jeden Einzelfall durch Versuche leicht ermittelt werden. Höhere Temperaturen erhöhen die Reaktionsgeschwindigkeiten und begünstigen Nebenreaktionen, wie beispielsweise Wasserabspaltung aus Alkoholen oder Bildung farbiger Nebenprodukte. Es ist zur Entfernung des Reaktionswassers günstig, dass der Alkohol aus dem Reaktionsgemisch abdestillieren kann. Die gewünschte Temperatur oder der gewünschte Temperaturbereich kann durch den Druck im Reaktionsgefäß eingestellt werden. Bei niedrig siedenden Alkoholen wird daher die Umsetzung bei Überdruck und bei höher siedenden Alkoholen bei verminderten Druck durchgeführt. Beispielsweise wird bei der Umsetzung von Benzoesäure mit einem Gemisch isomerer Nonanole in einem Temperaturbereich von 170 °C bis 250 °C im Druckbereich von 1 bar bis 10 mbar gearbeitet.

Die in die Reaktion zurückzuführende Flüssigkeitsmenge kann teilweise oder vollständig aus Alkohol bestehen, der durch Aufarbeitung des azeotropen Destillats gewonnen wird. Es ist auch möglich, die Aufarbeitung zu einem späteren Zeitpunkt durchzuführen und die entfernte Flüssigkeitsmenge ganz oder teilweise durch frischen Alkohol, d. h. aus einem im Vorratsgefäß bereitstehenden Alkohol zu ersetzen.

Die Rohestergemische, die neben dem/den Ester(n) auch Alkohol, Katalysator oder dessen Folgeprodukte und gegebenenfalls Nebenprodukte enthalten, werden nach an sich bekannten Verfahren aufgearbeitet. Die Aufarbeitung umfasst dabei folgende Schritte: Abtrennung des überschüssigen Alkohols und ggf. Leichtsieder, Neutralisation der vorhandenen Säuren, optional eine Wasserdampfdestillation, Umwandlung des Katalysators in einen leicht filtrierbaren Rückstand, Abtrennung der Feststoffe und gegebenenfalls eine Trocknung. Dabei können je nach angewendetem Aufarbeitungsverfahren die Reihenfolge dieser Schritte verschieden sein.

Optional kann der Nonylester oder das Gemisch der Nonylester aus dem Reaktionsgemisch, gegebenenfalls nach Neutralisation des Ansatzes, destillativ abgetrennt werden.

Alternativ können die erfindungsgemäßen Nonylbenzoate durch Umesterung eines Benzoesäureesters mit Nonanol oder einem Isononanolgemisch gewonnen werden. Als Edukte werden Benzoesäureester eingesetzt, deren am O-Atom der Estergruppe gebundenen Alkylreste 1 bis 8 C-Atome aufweisen. Diese Reste können aliphatisch, geradkettig oder verweigt, alicyclisch oder aromatisch sein. Eine oder mehrere Methylengruppen dieser Alkyl-Reste können durch Sauerstoff substituiert sein. Es ist zweckmäßig, dass die dem Eduktester zugrunde liegenden Alkohole niedriger sieden als das eingesetzte Nonanol oder Isononanolgemisch.

Bevorzugte Einsatzstoffe für die Umesterung sind Benzoesäuremethylester, Benzoesäureethylester, Benzoesäurepropylester, Benzoesäureisobutylester, Benzoesäure-nbutylester und/oder Benzoesäurepentylester .

Die Umesterung wird katalytisch, beispielsweise mit Brönstedt- oder Lewissäuren oder Basen, durchgeführt. Ganz gleich, welcher Katalysator eingesetzt wird, es entsteht immer ein temperaturabhängiges Gleichgewicht zwischen den Einsatzstoffen (Alkylbenzoat und Nonanol oder Isononanolgemisch) und den Produkten ( Nonylester oder Nonylestergemisch und freigesetzter Alkohol). Um das Gleichgewicht zu Gunsten des Nonylesters oder des Isononylestergemisches zu verschieben, wird der aus dem Eduktester entstehende Alkohol aus dem Reaktionsgemisch abdestilliert.

Es ist auch hier zweckmäßig, Nonanol bzw. das Isononanolgemisch im Überschuss einzusetzen.

Als Umesterungskatalysatoren können Säuren, wie beispielsweise Schwefelsäure, Methansulfonsäure oder p-Toluolsulfonsäure, oder Metalle oder deren Verbindungen eingesetzt werden. Geeignet sind z. B. Zinn, Titan, Zirconium, die als feinverteilte Metalle oder zweckmäßig in Form ihrer Salze, Oxide oder löslichen organischen Verbindungen verwendet werden. Die Metallkatalysatoren sind im Gegensatz zu Protonensäuren Hochtemperaturkatalysatoren, die ihre volle Aktivität erst bei Temperaturen oberhalb 180 °C erreichen. Sie werden jedoch bevorzugt eingesetzt, weil sie im Vergleich zur Protonenkatalyse weniger Nebenprodukte, wie beispielsweise Olefine aus dem eingesetzten Alkohol, bilden. Beispielhafte Vertreter für Metallkatalysatoren sind Zinnpulver, Zinn(II)oxid, Zinn(II)oxalat, Titansäureester wie Tetraisopropylorthotitanat oder Tetrabutylorthotitanat sowie Zirconiumester wie Tetrabutylzirconat.
Weiterhin können basische Katalysatoren, wie beispielsweise Oxide, Hydroxide, Hydrogencarbonate, Carbonate oder Alkoholate von Alkali- oder Erdalkalimetallen verwendet werden. Aus dieser Gruppe werden bevorzugt Alkoholate, wie beispielsweise Natriummethylat eingesetzt. Alkoholate können auch in situ aus einem Alkalimetall und einem Nonanol bzw. einem Isonanolgemisch hergestellt werden.

Die Katalysatorkonzentration hängt von der Art des Katalysators ab. Sie beträgt üblicherweise von 0,005 bis 1,0 Massen-% bezogen auf das Reaktionsgemisch.

Die Reaktionstemperaturen für die Umesterung betragen üblicherweise von 100 bis 220 °C. Sie müssen mindestens so hoch sein, dass der aus dem Eduktester entstehende Alkohol bei dem vorgegebenen Druck, meistens Normaldruck, aus dem Reaktionsgemisch abdestillieren kann.

Die Umesterungsgemische können genauso wie für die Veresterungsgemische beschrieben aufgearbeitet werden.

Die Herstellung der erfindungsgemäßen Kompositionen kann auf verschiedene Weisen erfolgen. In der Regel werden die Kompositionen durch intensives Mischen aller Komponenten in einem geeigneten Mischbehälter hergestellt. Hierbei werden die Komponenten bevorzugt nacheinander zugegeben (z.B. E.J. Wickson, "Handbook of PVC Formulating", John Wiley and Sons,1993, S. 727).

Die erfindungsgemäßen Kompositionen können zur Herstellung von geschäumten Produkten, die zumindest ein Polymer, ausgewählt aus Polyvinylchlorid, Polyvinylidenchlorid, chlorierten Polyolefinen und Copolymeren von Vinylchlorid mit Vinylidenchlorid, Vinylacetat, Vinylpropionat, Vinylbutyrat, Vinylbenzoat, Methylacrylat, Ethylacrylat, Butylacrylat, zumindest einen primären Weichmacher, einen Benzoesäureisononylester und gegebenenfalls weitere Additive aufweisen, verwendet werden. Solche Produkte können z.B. Kunstleder, Tapeten oder die verschiedenen Schaumschichten für Fußbodenbeläge (CV-Schaum bzw. Rückseitenschaum) sein.

Bevorzugt werden die erfindungsgemäßen Kompositionen zur Herstellung von Plastisolen, insbesondere von denen des PVC, mit besonders vorteilhaften verarbeitungstechnischen Eigenschaften verwendet. Diese schäumbaren Plastisole können in zahlreichen Produkten wie beispielweise Kunstleder, Fußböden, Tapeten etc eingesetzt werden. Unter diesen Anwendungen besonders bevorzugt ist die Verwendung in cushion vinyl (CV)-Fußböden. Durch Verwendung der erfindungsgemäßen Kompositionen als Rezepturbestandteil oder direkt als Plastisole können Plastisole mit niedriger Viskosität sowie erhöhter Lagerstabilität und gleichzeitig mit beschleunigter Gelierung und verbesserter Kälteflexibilisierung erhalten werden.

Das erfindungsgemäße Verfahren zur Herstellung von Produkten, die eine geschäumte Polymerschicht, ausgewählt aus den Polymeren Polyvinylchlorid, Polyvinylidenchlorid, chlorierten Polyolefinen und Copolymeren von Vinylchlorid mit Vinylidenchlorid, Vinylacetat, Vinylpropionat, Vinylbutyrat, Vinylbenzoat, Methylacrylat, Ethylacrylat, Butylacrylat, aufweisen, zeichnet sich dadurch aus, dass eine erfindungsgemäße Komposition auf einen Träger oder eine weitere Polymerschicht aufgebracht wird, und die Komposition vor oder nach dem Aufbringen geschäumt wird und die aufgebrachte und geschäumte Komposition abschließend thermisch verarbeitet wird.

Das Schäumen kann mechanisch oder chemisch erfolgen. Unter mechanischer Verschäumung einer Komposition/ eines Plastisols wird verstanden, dass in das Plastisol, vor dem Auftragen auf den Träger, unter genügend starkem Rühren Luft eingetragen wird, die zum Aufschäumen führt. Zur Stabilisierung des so entstehenden Schaumes ist ein Stabilisator notwendig. In der Regel werden entweder Systeme auf Silikon oder Seifen verwendet. Diese unterscheiden sich hinsichtlich des fertigen Schaumes vor allem in Zellstruktur, Farbe und Wasseraufnahmevermögen. Die Wahl des Stabilisatortyps hängt u.a. auch von den Weichmachern ab, die eingesetzt werden sollen. So ist beispielsweise dem Fachmann bekannt, dass bei Verwendung der preisgünstigeren Seifen-Schaumstabilisatoren genügend große Mengen an Benzylphthalaten (zum Beispiel BBP) oder Glycoldibenzoaten zu den in der Regel verwendeten Dialkylphthalaten, beispielsweise DEHP, DINP, DIDP oder DIHP, zugegeben werden müssen. Da die Verwendung von BBP durch die bevorstehende Kennzeichnung nach Chemikalienrecht ("toxisch") in letzter Zeit stark zurück geht, wurden oftmals Glykoldibenzoate als Ersatzstoffe eingesetzt. Unter Glykoldibenzoaten werden hier im wesentlichen Diethylenglykoldibenzoat (DEGDB), Triethylenglykoldibenzoat (TEGDB) und Dipropylenglykoldibenzoat (DPGDB) oder deren Gemische verstanden. Kommerziell erhältlich sind diese Produkte u.a. unter dem Handelsnamen "Benzoflex" von der Fa. Velsicol / USA. Insbesondere Benzoflex 2088 (laut Herstellerangabe 61-69% DEGDB, 16-24% DPGDB, 11-19% TPGDB) und Benzoflex 2160 (laut Herstellerangabe 49% DEGDB, 29% TEGDB, 15% Di-2-ethylhexyladipat u.a.) haben als Blends von Glykoldibenzoaten im PVC-Fußbodenbereich eine gewisse Bedeutung erlangt. Diese Produkte neigen allerdings zu starker Dilatanz, d.h. zu einem starken Anstieg der Viskosität bei höheren Schergeschwindigkeiten, so dass es zu Problemen bei der Verarbeitung kommen kann. Abmischungen dieser Glykoldibenzoate mit Isononylbenzoat können diesen Nachteil weitestgehend kompensieren. Erfindungsgemäße schäumbare Kompositionen, die zur Herstellung von mechanischen Schäumen eingesetzt werden sollen, können deshalb neben Isononylbenzoat auch Glykoldibenzoate aufweisen. Die aufgeschäumte Komposition wird anschließend auf den Träger oder eine weitere Polymerschicht aufgebracht und abschließend thermisch behandelt. Beispiele für kommerziell erhältliche Seifenschaumstabilisatoren sind BYK 8070 (Byk-Chemie) und SYNTHAMID 218 (Th. Boehme GmbH), ein weit verbreitetes auf Silikon basierendes System ist das BYK 8020 (Byk-Chemie).

Bei der chemischen Verschäumung weist das Plastisol bzw. die erfindungsgemäße Komposition eine Verbindung, ein sogenanntes Treibmittel auf, welches unter Wärmeeinfluss in überwiegend gasförmige Bestandteile zerfällt, die ein Aufblähen des Plastisols bewirken. Ein typischer Vertreter ist das Azodicarbonamid. Die Zerfallstemperatur des Treibmittels kann durch Zugabe von Katalysatoren deutlich verringert werden. Diese Katalysatoren sind dem Fachmann als "Kicker" geläufig und können entweder separat oder bevorzugt als ein System mit dem Thermostabilisator zugegeben werden. Auf das Vorhandensein eines Schaumstabilisators kann im Gegensatz zum mechanischen Schaum gegebenenfalls verzichtet werden. Im Unterschied zum mechanischen Schaum wird bei chemischen Schäumen der Schaum erst bei der Verarbeitung, in der Regel in einem Gelierkanal, gebildet, dass heißt, dass die noch ungeschäumte Komposition auf den Träger, bevorzugt durch Aufstreichen, aufgebracht wird. Bei dieser Ausführungsart des erfindungsgemäßen Verfahrens kann eine Profilierung des Schaums durch selektive Auftragung von Inhibitorlösungen, beispielsweise über eine Rotationssiebdruckanlage, erreicht werden. An den Stellen, auf denen die Inhibitorlösung aufgetragen wurde, fmdet die Expansion des Plastisols während der Verarbeitung entweder überhaupt nicht oder nur verzögert statt. In der Praxis wird die chemische Verschäumung gegenüber der mechanischen in deutlich stärkerem Maße eingesetzt. Weitere Informationen über das chemische und mechanische Schäumen können z.B. E.J. Wickson, "Handbook of PVC Formulating", 1993, John Wiley & Sons, entnommen werden.

Bei beiden Verfahren können als Träger solche Materialien verwendet werden, die mit dem hergestellten Schaum fest verbunden bleiben, wie z.B. Gewebe- oder Vliesbahnen. Ebenso können die Träger aber auch nur temporäre Träger sein, von denen die hergestellten Schäume als Schaumschichten wieder entfernt werden können. Solche Träger können z.B. Metallbänder oder Release-Papier (Duplex-Papier) sein. Ebenfalls kann eine weitere, ggf. schon ganz oder teilweise (= vorgelierte) ausgelierte Polymerschicht als Träger fungieren. Dies wird insbesondere bei CV-Fußböden praktiziert, die aus mehreren Schichten aufgebaut sind.

Die abschließende thermische Verarbeitung erfolgt in beiden Fällen in einem sogenannten Gelierkanal, in der Regel ein Ofen, der von der auf dem Träger aufgebrachten Schicht aus der erfindungsgemäßen Komposition durchlaufen wird oder in den der mit der Schicht versehene Träger kurzzeitig eingeführt wird. Die abschließende thermische Verarbeitung dient der Verfestigung (Gelierung) der geschäumten Schicht. Bei der chemischen Verschäumung kann der Gelierkanal mit einer Vorrichtung, die zur Erzeugung des Schaums dient, kombiniert werden. So ist es z.B. möglich, nur einen Gelierkanal zu verwenden, bei dem im vorderen Teil bei einer ersten Temperatur durch Zersetzung einer gasbildenden Komponente chemisch der Schaum erzeugt wird und dieser Schaum im hinteren Teil des Gelierkanals bei einer zweiten Temperatur, die vorzugsweise höher als die erste Temperatur ist, ins Halbzeug oder Endprodukt überführt wird. Je nach Zusammensetzung ist es außerdem möglich, dass Gelierung und Schaumbildung zeitgleich bei einer einzigen Temperatur erfolgen. Typische Verarbeitungsstemperaturen (Geliertemperaturen) liegen im Bereich von 130 bis 280 °C, vorzugsweise im Bereich von 150 bis 250 °C. Die Gelierung erfolgt vorzugsweise so, dass die geschäumte Komposition bei den genannten Geliertemperaturen für eine Dauer von 0, 5 bis 5 Minuten, vorzugsweise für eine Dauer von 0,5 bis 3 Minuten behandelt wird. Die Dauer der Temperaturbehandlung kann dabei bei kontinuierlich arbeitenden Verfahren durch die Länge des Gelierkanals und die Geschwindigkeit, mit welcher der den Schaum aufweisende Träger durch diesen hindurchläuft, eingestellt werden. Typische Schaumbildungstemperaturen (chemischer Schaum) liegen im Bereich von 160 bis 240 °C, bevorzugt 180 bis 220 °C.

Bei mehrschichtigen Systemen werden in der Regel die einzelnen Schichten zuerst durch eine sogenannte Vorgelierung des aufgetragenen Plastisols bei einer Temperatur, die unter der Zersetzungstemperatur des Treibmittels liegt, in ihrer Form fixiert, danach können weitere Schichten (zum Beispiel eine Deckschicht) aufgetragen werden. Wenn alle Schichten aufgetragen sind, wird bei einer höheren Temperatur die Gelierung ― und im Falle der chemischen Verschäumung auch die Schaumbildung - durchgeführt. Durch diese Verfahrensweise kann die gewünschte Profilierung auch an die Deckschicht übertragen werden.

Durch die erfindungsgemäßen Kompositionen und das erfindungsgemäße Verfahren sind Produkte, die zumindest ein Polymer, ausgewählt aus Polyvinylchlorid, Polyvinylidenchlorid, chlorierten Polyolefinen und Copolymeren von Vinylchlorid mit Vinylidenchlorid, Vinylacetat, Vinylpropionat, Vinylbutyrat, Vinylbenzoat, Methylacrylat, Ethylacrylat, Butylacrylat, aufweisen, und die dadurch gekennzeichnet sind, dass sie geschäumte Schichten einer erfindungsgemäßen Komposition aufweisen, herstellbar. Solche Produkte können z.B. Fußbodenbeläge, Tapeten oder Kunstleder sein.

Die folgenden Beispiele sollen die Erfindung erläutern, ohne die Anwendungsbreite einzuschränken, die sich aus der Beschreibung und den Patentansprüchen ergibt.

### Beispiel 1:

### Herstellung von Isononylbenzoat

In einem 4-Liter-Destillationskolben mit aufgesetztem Wasserabscheider und Rückflusskühler sowie einem Probenahmestutzen und Thermometer wurden 976 g Benzoesäure (8 Mol), 1728 g Isononanol der Fa. OXENO Olefinchemie GmbH (12 Mol) und 0,59 g Butyltitanat (0,06% bezogen auf die Säuremenge) eingewogen und unter Stickstoffatmosphäre zum Sieden erhitzt. Das bei der Veresterung anfallende Reaktionswasser wurde regelmäßig abgenommen. Als die Säurezahl unter 0,1 mg KOH/g sank, (nach ca. 3 Stunden) wurde der Ansatz zunächst auf unter 60 °C abgekühlt und eine 20 cm Multifillkolonne aufgesetzt. Danach wurde der Druck auf 2 mbar verringert und zunächst der überschüssige Alkohol (etwa 120 °C) abdestilliert. Nach der Abtrennung eines Zwischenlaufes bis 140 °C, konnte in einem Bereich von 142 bis 147 °C (bei 2 mbar), gemessen am Kolonnenkopf, das Isononylbenzoat überdestilliert werden. Gaschromatographisch konnte eine Reinheit von > 99,7% ermittelt werden. Die Viskosität des Produktes bei 20 °C wurde gemäß der DIN 53 015 zu 8,4 mPa∗s bestimmt.

### Beispiel 2:

### Herstellung von Plastisolen für chemischen Schaum (CV-Schaum)

Die Einwaage der Komponenten ist der nachfolgenden Tabelle zu entnehmen.

**Tabelle 1: Rezepturen (Alle Angaben in phr (= Gewichtsteile pro 100 Teile PVC))**

| | **1** | **2** | **3** | **4** **erfindungsgemäß** | **5** ***(Deckschicht)*** |
|---|---|---|---|---|---|
| VESTOLIT P1352 K (Fa. Vestolit) | 80 | 80 | 80 | 80 | |
| VESTOLIT P1430 K90 (Fa. Vestolit) | | | | | *80* |
| VINNOLIT C65V (Fa. Vinnolit) | 20 | 20 | 20 | 20 | *20* |
| VESTINOL AH (DEHP, OXENO) | | | | | *35* |
| VESTINOL 9 (DINP, OXENO) | 40 | 40 | 40 | 40 | *12* |
| Unimoll BB (BBP, Fa. Bayer) | 17 | | | | |
| Diisobutylphthalat (DIBP, Fa. OXENO) | | 17 | | | |
| Benzoflex 2088 (Fa. Velsicol) | | | 17 | | |
| Isononylbenzoat (INB) | | | | 17 | |
| Lankroflex ED 6 (Fa. Akcros) | | | | | *3* |
| Baerostab CT 9156 X (Fa. Baerlocher) | | | | | *1,5* |
| Porofor ADC / L-C2 (1:1) (Fa. Bayer) | 4 | 4 | 4 | 4 | |
| Bayoxid Z Aktiv (1:2) (Fa. Bayer) | 1,5 | 1,5 | 1,5 | 1,5 | |
| Kronos 2220 (Titandioxid, Fa. Kronos) | 5 | 5 | 5 | 5 | |
| Durcal 5 (Kreide, Fa. Omya) | 10 | 10 | 10 | 10 | |

Die Weichmacher wurden vor der Zugabe auf 25 °C temperiert. Die flüssigen Bestandteile wurden zuerst, dann die pulverförmigen in einen PE-Becher eingewogen. Von Hand wurde die Mischung mit einem Salbenspatel so eingerührt, dass kein unbenetztes Pulver mehr vorhanden war. Der Mischbecher wurde dann in die Klemmvorrichtung eines Dissolverrührers eingespannt. Vor dem Eintauchen des Rührers in die Mischung wurde die Drehzahl auf 1800 Umdrehungen pro Minute eingestellt. Nach dem Einschalten des Rührers wurde so lange gerührt, bis die Temperatur an der Digitalanzeige des Thermofühlers 30,0 °C erreichte. Damit war sicher gestellt, dass die Homogenisierung des Plastisols bei einem definierten Energieeintrag erreicht wurde. Danach wurde das Plastisol sofort bei 25,0 °C temperiert.

### Beispiel 3:

### Vermessung der Pastisolviskositäten

Die Messung der Viskositäten der in Beispiel 2 hergestellten Plastisole 1 bis 4 wurden in Anlehnung an die DIN 53 019 mit dem Rheometer Physica DSR 4000, welches über die Software US 200 gesteuert wird, wie folgt durchgeführt.

Das Plastisol wurde im Vorratsbehälter nochmals mit einem Spatel umgerührt und in dem Messsystem Z3 (DIN 25 mm) gemäß Bedienungsanleitung vermessen. Die Messung verlief bei 25 °C automatisch über die o.g. Software. Folgende Punkte wurden angesteuert:
- Eine Vorscherung von 100 s⁻¹ für den Zeitraum von 60 s, bei der keine Messwerte aufgenommen wurden
- Eine Abwärtsrampe, beginnend bei 200 s⁻¹ bis herunter zu 0,1 s⁻¹, aufgeteilt in eine logarithmische Reihe mit 30 Schritten mit jeweils 5 s Messpunktdauer.

Die Aufbereitung der Messdaten wurde nach der Messung automatisch von der Software durchgeführt. Dargestellt wurde die Viskosität in Abhängigkeit von der Schergeschwindigkeit. Die Messungen wurden jeweils nach 2 h und 24 h durchgeführt. Zwischen diesen Zeitpunkten wurde die Paste bei 25°C gelagert.

In den beiden folgenden Tabellen 2 und 3 sind für die Schergeschwindigkeiten von 10 s⁻¹ und 100 s⁻¹ jeweils die nach den angegebenen Lagerzeiten erhaltenen entsprechenden Viskositätswerte aufgeführt.

**Tabelle 2: Schergeschwindigkeit 10 s⁻¹ (Angaben der Viskositäten in Pa∗s)**

| **Rezeptur** | **1** | **2** | **3** | **4** **(erfindungsgemäß)** |
|---|---|---|---|---|
| **2 h** | 3,9 | 3,9 | 3,8 | **2,7** |
| **24 h** | 5,2 | 5,0 | 4,8 | **3,1** |

**Tabelle 3: Schergeschwindigkeit 100 s⁻¹ (Angaben der Viskositäten in Pa∗s)**

| **Rezeptur** | **1** | **2** | **3** | **4** **(erfindungsgemäß)** |
|---|---|---|---|---|
| **2 h** | 4,3 | 3,9 | 4,5 | **2,1** |
| **24 h** | 5,7 | 5,2 | 5,7 | **2,6** |

An Hand der in den Tabellen 2 und 3 aufgeführten Messwerten kann gezeigt werden, dass sich die Schaumplastisole mit Isononylbenzoat (Rezeptur 4) in ihrem Viskositätsverhalten wesentlich von den Plastisolen mit gleichen Anteilen BBP, DIBP oder Benzoflex 2088 unterscheiden. Die geringere Viskosität des erfindungsgemäßen Plastisols ermöglicht den zumindest teilweisen Verzicht auf oft teure viskositätssenkende Reagenzien.

### Beispiel 4:

### Chemische Verschäumung bei 200 °C

Die in Beispiel 2 hergestellten Plastisole 1 bis 4 werden mit Hilfe eines Rakels so auf Duplexpapier Kamplex LWB (120 g/m², Fa. Kämmerer) aufgetragen, dass die Auftragsstärke 360 ± 10 g/m² beträgt. Damit wird ein Gelierkanal (Fa. Olbrich, Länge 8m) bei einer Temperatur von 130 °C mit 6 m/min. zur Trocknung / Vorgelierung durchlaufen. Danach wird in einer analogen Prozedur jeweils eine Deckschicht (Rezeptur 5 aus Tabelle 1, Auftragsstärke 200 ± 10 g/m²) auf diese Schicht aufgetragen. Anschließend wird die Gelierung/Verschäumung bei 200 °C mit unterschiedlichen Verweilzeiten, eingestellt über die Transportgeschwindigkeit der Anlage, durchgeführt. Die Dicken der geschäumten Schichten wurden jeweils vermessen.

Über die Dicken der so hergestellten Produkte lässt sich die prozentuale Aufschäumrate, bezogen auf die Dicke des lediglich vorgelierten Produktes, bestimmen. In Tabelle 4 sind die Aufschäumraten für die Rezepturen 1 bis 4 nach einer Verweilzeit von 60, 80, 100 und 120 Sekunden angegeben.

**Tabelle 4: Aufschäumraten der Rezepturen 1 bis 4 (Angaben in Prozent)**

| | | | | |
|---|---|---|---|---|
| Verweilzeit (s) | **60** | **80** | **100** | **120** |
| Rezeptur 1 | 1,7 | 94,9 | 245,8 | 289,8 |
| Rezeptur 2 | 0,0 | 77,6 | 237,9 | 291,4 |
| Rezeptur 3 | 0,0 | 91,5 | 239,0 | 274,6 |
| **Rezeptur 4** **(erfindungsgemäß)** | **0,0** | **62,1** | **246,6** | **317,2** |

Trotz einer etwas langsameren Aufschäumung des erfindungsgemäßen Plastisols 4 bei einer geringeren Verweilzeit von 80 s (mitten im Aufschäumprozess), zeigt sich, dass bei für die Praxis typischen Verweilzeiten von 100 s oder darüber mindestens gleiche oder sogar bessere vergleichbare Verschäumungsraten erhalten werden können.

### Beispiel 5:

### Mechanische Verschäumung (Herstellung Plastisole)

Zunächst wurden gemäß der in der nachfolgenden Tabelle 5 gegebenen Rezepturübersicht folgende Plastisole hergestellt:

**Tabelle 5: Rezepturen der Plastisole für die mechanische Verschäumung (Angaben in phr)**

| | **6** | **7** | **8** | **9** |
|---|---|---|---|---|
| VESTOLIT P1415K80 (Fa. Vestolit) | 70 | 70 | 70 | 70 |
| VINNOLIT C65V (Fa. Vinnolit) | 30 | 30 | 30 | 30 |
| VESTINOL 9 (Fa. OXENO) | 30 | 30 | 30 | 30 |
| Unimoll BB (BBP, Fa. Bayer) | 30 | | | |
| Benzoflex 2088 (Fa. Velsicol) | | 30 | 20 | 15 |
| Isononylbenzoat | | | 10 | 15 |
| Byk 8070 (Fa. Byk-Chemie) | 2,6 | 2,6 | 2,6 | 2,6 |
| Durcal 5 (Kreide, Fa. Omya ) | 30 | 30 | 30 | 30 |

Nach Herstellung der Plastisole gemäß Beispiel 2 werden diese bei 20 mbar entlüftet, um evt. durch den Rührprozess eingetragene Luft wieder zu vertreiben. Der Entlüftungsvorgang ist bei den niedrig viskosen Plastisolen in allen Fällen einfacher als bei den zähflüssigeren.

Von den Plastisolen 6 bis 9 wurden ebenfalls nach 2 und 24 Stunden die Viskositäten mit einem Physica Rheometer bei Schergeschwindigkeiten von 10 und 100 s⁻¹ gemäß Beispiel 3 bestimmt, die in den Tabellen 6 und 7 aufgelistet sind.

**Tabelle 6: Viskositäten der Plastisole bei Schergeschwindigkeit 10 s⁻¹ in Pa∗s:**

| | **6** | **7** | **8** | **9** |
|---|---|---|---|---|
| Nach 2 h | 3,2 | 3,5 | 2,0 | 1,5 |
| Nach 24 h | 3,6 | 3,9 | 2,2 | 1,6 |

**Tabelle 7: Viskositäten der Plastisole bei Schergeschwindigkeit 100 s⁻¹ in Pa∗s:**

| | **6** | **7** | **8** | **9** |
|---|---|---|---|---|
| Nach 2 h | 3,9 | 4,8 | 2,5 | 1,9 |
| Nach 24 h | 4,4 | 5,4 | 2,8 | 2,0 |

Auch hier ist wiederum der Einfluss eines steigenden Gehaltes an Isononylbenzoat auf die Viskosität der Plastisole zu erkennen.

Wiederum wird das Verhalten des Plastisols unter produktionsnahen Bedingungen in einem Gelierkanal (Fa. Olbrich, Länge 8 m ) vermessen. Das Plastisol wird nach Vorschäumung durch Eindüsen von Luft unter Rühren auf eine Nassschaumdichte von 0,61 g/cm³ über ein Rakel (Spaltweite 1,5 mm; Rakelfase 9 mm, Rakelwinkel 7°) auf Duplexpapier Kamplex LWB (120 g/m², Fa. Kämmerer) aufgetragen und dann mit einer voreingestellten Geschwindigkeit durch den Gelierkanal gefahren.

Variiert man bei einer Verarbeitungstemperatur von 180 °C die Verweilzeit im Gelierkanal, so kann man die maximale Verarbeitungsgeschwindigkeit bzw. Streichgeschwindigkeit, bei der noch ein stabiler Schaum erzeugt wird, ermitteln. Für die Beurteilung entscheidend ist hierbei die Homogenität der Oberfläche, die visuell bewertet wird. Zusätzlich wurden bei einer für Praxiszwecke typischen Verweilzeit von 1,3 min (entspricht hier einer Geschwindigkeit von 6 m/min) die Schaumdichten im ausgelierten Endprodukt durch Wägung und Dickenmessung bestimmt. Die Ergebnisse sind in Tabelle 8 angegeben.

**Tabelle 8: Ergebnisse der Verarbeitung**

| | **6** | **7** | **8** | **9** |
|---|---|---|---|---|
| Max. Streichgeschw. in m/min. | 8 | 10 | 10 | 8 |
| Schaumdichte in g/cm³ nach 1,3 min. Verweilzeit (typisch) | 0,60 | 0,65 | 0,58 | 0,56 |

Wie den Ergebnissen aus Tabelle 8 entnommen werden kann, können die erfindungsgemäßen Plastisole mit Isononylbenzoat (Rezeptur 8 bzw. 9) bei gegenüber den Rezepturen 6 und 7 vergleichbaren maximalen Streichgeschwindigkeiten stärker geschäumt werden, was durch die geringere Dichte zu erkennen ist.

## Patentansprüche

1. Schäumbare Kompositionen zur Herstellung von geschäumten Produkten, die zumindest ein Polymer, ausgewählt aus Polyvinylchlorid, Polyvinylidenchlorid, chlorierten Polyolefinen und Copolymeren von Vinylchlorid mit Vinylidenchlorid, Vinylacetat, Vinylpropionat, Vinylbutyrat, Vinylbenzoat, Methylacrylat, Ethylacrylat, Butylacrylat, zumindest einen primären Weichmacher, gegebenenfalls weitere Additive und einen Benzoesäurealkylester aufweisen,
**dadurch gekennzeichnet,**
**dass** als Benzoesäurealkylester Benzoesäureisononylester in der Komposition vorhanden ist und die Menge aller vorhandenen Weichmacher von 10 bis 400 Massenanteile bezogen auf 100 Massenanteile an Polymeren beträgt, wobei der Anteil des Benzoesäureisononylesters an der Menge der Weichmacher von 5 bis 95 Massen-% beträgt und dass die Komposition als Additiv einen Schaumstabilisator oder eine oder mehrere, Gasblasen entwickelnde Komponenten aufweist.

2. Kompositionen nach Anspruch 1,
**dadurch gekennzeichnet,**
**dass** die Komposition als primären Weichmacher Phthalsäuredialkylester, wobei deren Alkylreste 4 bis 13 Kohlenstoffatome enthalten, Adipinsäurealkylester, wobei deren Alkylreste 4 bis 13 Kohlenstoffatome enthalten, Cyclohexandicarbonsäurealkylester, wobei deren Alkylreste 4 bis 13 Kohlenstoffatome, Trimellitsäureester, mit 7 bis 10 Kohlenstoffatomen in der Alkoholkette, Alkylsulfonsäureester des Phenols, Polymerweichmacher, Alkyl-Benzylphthalate, Dibenzoesäurester von Diethylenglycol, Dipropylenglycol oder Triethylenglycol und/oder Citronensäureester aufweisen.

3. Kompositionen nach Anspruch 2
**dadurch gekennzeichnet,**
**dass** als Phthalsäurealkylester Phthalsäurediisononylester, Phthalsäurediisoheptylester und/oder Phthalsäuredi-2-ethylhexylester, als Cyclohexandicarbonsäurealkylester Cyclohexandicarbonsäurediisononylester oder als Adipinsäurealkylester Adipinsäurediisononylester vorhanden ist.

4. Kompositionen nach einem der Ansprüche 1 bis 3,
**dadurch gekennzeichnet,**
**dass** die Komposition als Additive zumindest ein Additiv, ausgewählt aus der Gruppe der Füllstoffe, Pigmente, Thermostabilisatoren, Antioxidantien, Viskositätsregulierer und Gleitmittel aufweist.

5. Kompositionen nach einem der Ansprüche 1 bis 4,
**dadurch gekennzeichnet,**
**dass** die Komposition eine Gasblasen entwickelnde Komponente und optional einen Kicker aufweist.

6. Kompositionen nach einem der Ansprüche 1 bis 5,
**dadurch gekennzeichnet,**
**dass** die Komposition Emulsions-PVC aufweist.

7. Verwendung von Kompositionen gemäß einem der Ansprüche 1 bis 6 zur Herstellung von geschäumten Produkten, die zumindest ein Polymer, ausgewählt aus Polyvinylchlorid, Polyvinylidenchlorid, chlorierten Polyolefinen und Copolymeren von Vinylchlorid mit Vinylidenchlorid, Vinylacetat, Vinylpropionat, Vinylbutyrat, Vinylbenzoat, Methylacrylat, Ethylacrylat, Butylacrylat, zumindest einen primären Weichmacher, einen Benzoesäureisononylester und gegebenenfalls weitere Additive aufweisen.

8. Verwendung nach Anspruch 7,
**dadurch gekennzeichnet,**
**dass** als geschäumte Produkte Fußbodenbeläge (CV-Schaum (cushion vinyl) bzw. Rückseitenschaum), Kunstleder oder Tapeten hergestellt werden.

9. Verfahren zur Herstellung von Produkten die eine geschäumte Polymerschicht, ausgewählt aus den Polymeren Polyvinylchlorid, Polyvinylidenchlorid, chlorierten Polyolefinen und Copolymeren von Vinylchlorid mit Vinylidenchlorid, Vinylacetat, Vinylpropionat, Vinylbutyrat, Vinylbenzoat, Methylacrylat, Ethylacrylat, Butylacrylat, aufweisen,
**dadurch gekennzeichnet,**
**dass** eine Komposition gemäß einem der Ansprüche 1 bis 6 auf einen Träger aufgebracht wird, und die Komposition vor oder nach dem Aufbringen geschäumt wird und die aufgebrachte und geschäumte Komposition abschließend thermisch verarbeitet wird.

10. Produkte, die zumindest ein Polymer, ausgewählt aus Polyvinylchlorid, Polyvinylidenchlorid, chlorierten Polyolefinen und Copolymeren von Vinylchlorid mit Vinylidenchlorid, Vinylacetat, Vinylpropionat, Vinylbutyrat, Vinylbenzoat, Methylacrylat, Ethylacrylat, Butylacrylat, aufweisen,
**dadurch gekennzeichnet,**
**dass** sie zumindest eine geschäumte Schicht einer Komposition gemäß einem der Ansprüche 1 bis 6 aufweisen.

11. Produkt gemäß Anspruch 10,
**dadurch gekennzeichnet,**
**dass** das Produkt ein Fußbodenbelag, eine Tapete oder ein Kunstleder ist.

## Claims

1. Foamable compositions for producing foamed products, where these comprise at least one polymer selected from polyvinyl chloride, polyvinylidene chloride, chlorinated polyolefins, and copolymers of vinyl chloride with vinylidene chloride, vinyl acetate, vinyl propionate, vinyl butyrate, vinyl benzoate, methyl acrylate, ethyl acrylate, butyl acrylate, and comprise at least one primary plasticizer, and, where appropriate, comprise other additives, and comprise an alkyl benzoate,
**characterized in that**
isononyl benzoate is present as alkyl benzoate in the composition, and the amount of all of the plasticizers present is from 10 to 400 parts by weight, based on 100 parts by weight of polymers, the proportion of the isononyl benzoate being from 5 to 95% by weight of the amount of the plasticizers and **in that** the composition comprises, as additive, a foam stabilizer or one or more components which generate gas bubbles.

2. Compositions according to Claim 1,
**characterized in that**
the composition comprises, as primary plasticizer, dialkyl phthalates, the alkyl radicals of these containing from 4 to 13 carbon atoms, alkyl adipates, the alkyl radicals of these containing from 4 to 13 carbon atoms, alkyl cyclohexanedicarboxylates, the alkyl radicals of these containing from 4 to 13 carbon atoms, trimellitic esters having from 7 to 10 carbon atoms in the alcohol chain, alkylsulfonic esters derived from phenol, polymeric plasticizers, alkyl benzyl phthalates, dibenzoic esters of diethylene glycol, dipropylene glycol or triethylene glycol, and/or citric esters.

3. Compositions according to Claim 2
**characterized in that**
the alkyl phthalates present comprise diisononyl phthalate, diisoheptyl phthalate, and/or di-2-ethylhexyl phthalate, the alkyl cyclohexanedicarboxylates present comprise diisononyl cyclohexanedicarboxylate, or the alkyl adipates present comprise diisononyl adipate.

4. Compositions according to any of Claims 1 to 3,
**characterized in that** the composition
comprises, as additives, at least one additive selected from the group of the fillers, pigments, heat stabilizers, antioxidants, viscosity regulators, and lubricants.

5. Compositions according to any of Claims 1 to 4,
**characterized in that** the composition
comprises a component which generates gas bubbles, and optionally comprises a kicker.

6. Compositions according to any of Claims 1 to 5,
**characterized in that** the composition
comprises emulsion PVC.

7. Use of compositions according to any of Claims 1 to 6 for producing foamed products where these comprise at least one polymer selected from polyvinyl chloride, polyvinylidene chloride, chlorinated polyolefins, and copolymers of vinyl chloride with vinylidene chloride, vinyl acetate, vinyl propionate, vinyl butyrate, vinyl benzoate, methyl acrylate, ethyl acrylate, butyl acrylate, and comprise at least one primary plasticizer, an isononyl benzoate, and, where appropriate, comprise other additives.

8. Use according to Claim 7,
**characterized in that**
the foamed products produced comprise floorcoverings (cushion vinyl foam or foam-backed), synthetic leather, or wallcoverings.

9. Process for producing products which have a foamed polymer layer selected from the following polymers: polyvinyl chloride, polyvinylidene chloride, chlorinated polyolefins and copolymers of vinyl chloride with vinylidene chloride, vinyl acetate, vinyl propionate, vinyl butyrate, vinyl benzoate, methyl acrylate, ethyl acrylate, butyl acrylate,
**characterized in that**
a composition according to any of Claims 1 to 6 is applied to a backing, and the composition is foamed prior to or after application, and finally heat is used to process the applied and foamed composition.

10. Products which comprise at least one polymer selected from polyvinyl chloride, polyvinylidene chloride, chlorinated polyolefins and copolymers of vinyl chloride with vinylidene chloride, vinyl acetate, vinyl propionate, vinyl butyrate, vinyl benzoate, methyl acrylate, ethyl acrylate, butyl acrylate,
**characterized in that** they
comprise at least one foamed layer of a composition according to any of Claims 1 to 6.

11. Product according to Claim 10,
**characterized in that** it
is a floorcovering, a wallcovering, or a synthetic leather.

## Revendications

1. Compositions aptes à la formation de mousses, pour la fabrication de produits transformés en mousses, qui comportent au moins un polymère choisi parmi le poly(chlorure de vinyle), le poly(chlorure de vinylidène), des polyoléfines chlorées et des copolymères de chlorure de vinyle avec le chlorure de vinylidène, l'acétate de vinyle, le propionate de vinyle, le butyrate de vinyle, le benzoate de vinyle, l'acrylate de méthyle, l'acrylate d'éthyle, l'acrylate de butyle, au moins un plastifiant primaire, éventuellement d'autres additifs et un benzoate d'alkyle,
**caractérisées en ce que**
du benzoate d'isononyle est présent en tant que benzoate d'alkyle dans la composition et la quantité de tous les plastifiants présents va de 10 à 400 parties en masse par rapport à 100 parties en masse de polymères, la proportion du benzoate d'isononyle va de 5 à 95 % en masse par rapport à la quantité des plastifiants et **en ce que** la composition comporte comme additif un stabilisant de mousse ou un ou plusieurs composants dégageant des bulles de gaz.

2. Compositions selon la revendication 1,
**caractérisées en ce que**
les compositions comportent en tant que plastifiants primaires des phtalates de dialkyle dont les radicaux alkyle contiennent de 4 à 13 atomes de carbone, des adipates d'alkyle dont les radicaux alkyle contiennent de 4 à 13 atomes de carbone, des cyclohexanedicarboxylates d'alkyle dont les radicaux alkyle contiennent de 4 à 13 atomes de carbone, des esters d'acide trimellitique comportant de 7 à 10 atomes de carbone dans la chaîne alcool, des alkylsulfonates du phénol, des plastifiants polymères, des benzylphtalates d'alkyle, des dibenzoates de diéthylèneglycol, dipropylèneglycol ou triéthylèneglycol et/ou des esters d'acide citrique.

3. Compositions selon la revendication 2,
**caractérisées en ce que**
du phtalate de diisononyle, du phtalate de diisoheptyle et/ou du phtalate de 2-éthylhexyle est(sont) présents en tant que phtalate(s) d'alkyle, du cyclohexanedicarboxylate de diisononyle est présent en tant que cyclohexanedicarboxylate d'alkyle ou de l'adipate de diisononyle est présent en tant qu'adipate d'alkyle.

4. Compositions selon l'une quelconque des revendications 1 à 3,
**caractérisées en ce que**
la composition comporte en tant qu'additifs au moins un additif choisi dans le groupe des charges, pigments, stabilisants thermiques, antioxydants, régulateurs de viscosité et lubrifiants.

5. Compositions selon l'une quelconque des revendications 1 à 4,
**caractérisées en ce que**
la composition comporte un composant dégageant des bulles de gaz et éventuellement un initiateur.

6. Compositions selon l'une quelconque des revendications 1 à 5,
**caractérisées en ce que**
la composition comporte du PVC en émulsion.

7. Utilisation des compositions selon l'une quelconque des revendications 1 à 6, pour la fabrication de produits transformés en mousses qui contiennent au moins un polymère choisi parmi le poly(chlorure de vinyle), le poly(chlorure de vinylidène), des polyoléfines chlorées et des copolymères de chlorure de vinyle avec le chlorure de vinylidène, l'acétate de vinyle, le propionate de vinyle, le butyrate de vinyle, le benzoate de vinyle, l'acrylate de méthyle, l'acrylate d'éthyle, l'acrylate de butyle, au moins un plastifiant primaire, un benzoate d'isononyle et éventuellement d'autres additifs.

8. Utilisation selon la revendication 7,
**caractérisée en ce qu'**on fabrique en tant que produits transformés en mousses des revêtements de sol [mousse CV (*cushion vinyl,* coussin vinylique) ou mousse d'envers], du cuir synthétique ou des tentures.

9. Procédé pour la fabrication de produits qui comportent une couche transformée en mousse de polymère choisi parmi les polymères poly(chlorure de vinyle), poly(chlorure de vinylidène, polyoléfines chlorées et copolymères de chlorure de vinyle avec le chlorure de vinylidène, l'acétate de vinyle, le propionate de vinyle, le butyrate de vinyle, le benzoate de vinyle, l'acrylate de méthyle, l'acrylate d'éthyle, l'acrylate de butyle,
**caractérisé en ce qu'**on applique sur un support une composition selon l'une quelconque des revendications 1 à 6 et avant ou après l'application on transforme la composition en mousse et la composition appliquée et transformée en mousse est enfin traitée thermiquement.

10. Produits qui comportent au moins un polymère choisi parmi le poly(chlorure de vinyle), le poly(chlorure de vinylidène), des polyoléfines chlorées et des copolymères de chlorure de vinyle avec le chlorure de vinylidène, l'acétate de vinyle, le propionate de vinyle, le butyrate de vinyle, le benzoate de vinyle, l'acrylate de méthyle, l'acrylate d'éthyle, l'acrylate de butyle,
**caractérisés en ce qu'**ils comportent au moins une couche transformée en mousse d'une composition selon l'une quelconque des revendications 1 à 6.

11. Produits selon la revendication 10,
**caractérisé en ce que**
le produit est un revêtement de sol, une tenture ou un cuir synthétique.
